# EUROPEAN PATENT SPECIFICATION

(11) **EP 0 490 011 B1**
(45) Date of publication and mention of the grant of the patent: **07.09.1994**
(21) Application number: 90500119.4
(22) Date of filing: 14.12.1990
(51) Int. Cl.: C01B 33/34

(54) **A process to obtain zeolite 4A starting from bauxite**
Verfahren zur Herstellung von Zeolith 4A ausgehend von Bauxit
Procédé de fabrication de zeolite 4A à partir de bauxite

(43) Date of publication of application: 17.06.1992
(73) Proprietor: FORET, S.A., E-08008 Barcelona (ES)
(72) Inventor: Artigas Puerto, Ramon, E-08014 Barcelona (ES); Forner Benito, Juan, E-08018 Barcelona (ES)
(74) Representative: Alonso Langle, Emilio

(56) References cited:
- AU-A- 474 596
- DD-A- 141 918
- FR-A- 2 372 238
- FR-A- 2 444 005
- CHEMICAL ABSTRACTS, vol. 83, no. 25, 22nd December 1975, page 118, right-hand column, abstract no. 208093d, Columbus, Ohio, US; & JP-A-75 086 499 (NIPPON LIGHT METAL CO., LTD) 11-07-1975
- ULLMANN: "Ullmann's Encyclopedia of Industrial Chemistry", 5th edition, vol. A1, 1985, Ed. Wolfgang Gerhartz

## Description

### PURPOSE OF THE INVENTION

The purpose of the invention is a process to obtain Zeolite 4A starting from bauxite or from any other aluminium mineral suitable to be attacked by NaOH at atmospheric pressure.

According to the invention, the obtained Zeolite has a particle size between 1 and 10 microns (Coulter counter), an absorption capacity of calcium higher than 330 mg CaCO3 per gram of anhydrous product and whiteness not less than 99.0 (Hunter lab), and consequently is specially recommended for detergent manufacturing.

This process is cheaper than others due to the use of a cheaper aluminium raw material and because it requires a minimum energy supply. Besides, it does not generate any residues, neither solids nor liquids that could affect the ecological environment.

### BACKGROUND OF THE INVENTION

The processes known until now to obtain Zeolite 4A do not mention the bauxite as an aluminium source. The manufacture of Zeolite 4A starting from bauxite has several inconveniences in the crystallization step and in the color and purity of the final product, and also in the generation of contaminant residues. With the technology described in this invention, all these inconveniences are avoided, obtaining an optimum product for the manufacture of detergents. Moreover, the substitution of alumina trihydrate by bauxite, which is cheaper, and the possibility of its digestion at atmospheric pressure, notably reduces the manufacturing costs of Zeolite 4A.

### STATE OF THE ART

In the existing bibliography there are no references starting from bauxite to obtain Zeolite A. The references to US 3310373, BE 840315 and IT 19617A/79 are mentioned only as an information source of the previous art known by the inventors, and that is the why and wherefore they have researched the possibility to make a suitable, profitable and non-contaminating industrial process to obtain Zeolite A starting from a cheap raw material, abundant and rich in A12O3, such as the bauxite.

### DESCRIPTION OF THE INVENTION

According to the invention, it is started from bauxite, but any other aluminium mineral could be used which is capable of being attacked by sodium hydroxide at atmospheric pressure. Digestion of bauxite is performed in a rotative disolver with a solution of sodium hydroxide at a temperature below 100ºC, preferably between 90 and 100ºC.

The aluminium alkaline solution is filtered to separate it from the insoluble residues. The filtrate is purified by absorption of the organic material in resins of hydrophobic interaction.

The purified aluminium solution (without organic material) is driven to a reactor provided with a strong agitation where it is mixed at 65-70ºC with an alkaline solution of SiO2 obtained by digestion of silica with NaOH, forming a stable gel of sodium silicoaluminate. Crystallyzation is made in a conventional way; the mother liquor and washing waters, after their purification, are used again recycling them respectively to the bauxite and SiO2 digestors.

Bauxite muds are subjected to a digestion with 30% sulphuric acid which disolves all the cations but keeps up the SiO2 insoluble. The acid solution is filtered and the residue (SiO2) is sent to the digestor of SiO2, being recovered for the process. The filtrate, mainly formed by A12 (SO4)3 is adjusted in concentration and acidity, resulting suitable to be used in residual water treatment.

### EXAMPLES

### Example 1

A rotative reactor is continuously fed with 100Kg/h of an alkaline solution at 12% in NaOH and a temperature of 95ºC together with 10Kg/h of natural guyana bauxite having the following composition:
A12O3-55.4%
SiO2-6.2%
Fe2O3-2.0%
TiO2-4.6%
CaO-0.15%
MgO-0.12%
Na2O-1.13%
H2O-30.1%
Organic material: 0.3%

The effluent suspension is filtered in a pressure filter; the clear liquid is cooled to 40ºC and is passed through a bed of resins of hydrophobic interaction, which retains the organic material.

The fluid is heated to 70ºC and is fed continuously to a reactor provided with a strong agitation, together with an alkaline solution of SiO2 of molar ratio SiO2/Na2O=2.0 preheated to 70ºC in such a way that the reacting molar composition results in:

94% H2O; SiO2/Na2O=0.47;A12O3/Na2O=0.26

The obtained gel is transferred to a crystallizer and agitated, while its temperature is raised to 98±2ºC in 50 minutes. The crystallization is completed after 60 minutes, being the slurry fast cooled to 75ºC, filtered, washed and dried.

The dry product has a Ca absorption of 345mg CaCO3 per gram of anhydrous Zeolite, an average size of 4.0 microns with a modulation of (particles between 3 and 8 microns) of 87% and a whiteness L=99.3.

### Example 2

The muds produced in Example 1 during one hour of continuous attack of the bauxite are treated with 12Kg of 30% H2SO4 at 100ºC, during 1h, in a glass reactor provided with agitation. The resulting solution is filtered and the residue is disolved in an alkaline solution in such a way that the molar ratio SiO2/Na2O is 2.0. This solution is used in the obtention of the gel of Example 1 with the result there mentioned.

### DESCRIPTION OF THE DRAWINGS

In order to illustrate what has been said, there is attached a sheet of drawings with a diagram of the process integrated in an industrial facility to produce Zeolite 4A.

Taking this diagram as a reference, it could be observed how to the aluminium digestor 1 arrives from tank 3 bauxite and from tank 4 sodium hydroxide. Natural silica coming from tank 6 and sodium hydroxide from tank 4 go to reactor 5.

The reaction mixture of digestor 1 of aluminium mineral passes through a heat exchanger 7 where gets a temperature between 90 and 100ºC to a filtration step 8.

When the process is started from bauxite, unattacked residues formed by oxides and silicates of iron and aluminium are obtained which are treated with boiling sulphuric acid forming soluble sulphates of iron and aluminium; sulphuric acid comes from tank 23. Iron and aluminium are dissolved and the insoluble silica is used again.

In filtration step 8 a residues drain to the acid reactor 9 is prepared which is at the same time fed with sulphuric acid from tank 23.

The acid reaction product passes to a filtration step 11 where the resulting solid silica is recovered passing to the silica digestor 5 and the metal sulphates solution 12 can be used for water treatment.

The filtrate coming from filtration step 8 passes to a purification step 13 where the organic material is removed by means of a treatment with hydrophobic interaction resins.

From digestor 5 and from purification step 13 the reacting products pass to the gel reactor 14 where with agitation and at temperature of 60-65ºC the gel is obtained and passed to the crystallization step in the crystallizer 15 where, with adjustable temperature and agitation, it is achieved a crystallinity of 98%, passing afterwards to a cooling and concentration step 16 which cools the mass to a temperature below 75ºC in order to optimize the absorption of calcium of the Zeolite. Filtration and washing with de-ionized water in a vacuum filter 17 removes the excess alkalinity. The filtration 17 resulting mass is treated in dryer 20, and the resulting product, Zeolite 4A, with a particle size between 1 and 10 microns passes to the storage 21.

The water coming from 16 passes to the tank 22; the mother liquor from filtration 17 through the exchanger 7 returns to the digestor 1. The washing waters of filter 17 are purified in 18 with silica alkaline solution provided by the digestor 5 and after filtration 19 pass to the SiO2 reactor 5 returning them to the process. The cake passes to reactor 1.

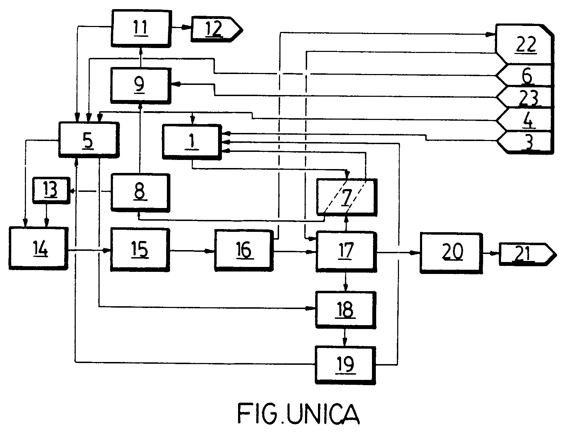

## Claims

1. A process for preparing a gel usable for obtaining zeolites characterized by preparing an alkaline aluminium solution starting from bauxite, attacking said bauxite in a reactor at atmospheric pressure with a solution of NaOH of 11 wt% minimum, purifying the resulting solution with resins and passing the purified product to a gel preparing step together with an alkaline solution of SiO2 with a molar ratio SiO2/Na2O between 2.0 and 2.5.

2. A process according to Claim 1 where the solution of the bauxite is made in a rotative reactor.

3. A process according to Claim 1 characterized because the bauxite residues (muds) are treated with boiling sulphuric acid, separating the sulphates as by-products and the SiO2 resulting from the acid attack is recycled as raw material to the SiO2 reactor.

4. A process according to Claim 1 characterized by the purification of the alkaline aluminium solution, resulting from the digestion of the bauxite with NaOH, with hydrophobic interaction resins.

5. A process according to Claim 1 where the NaOH solution has a concentration between 11 and 15 wt%.

## Patentansprüche

1. Verfahren zur Herstellung eines Gels, das zur Gewinnung von Zeolithen angewandt werden kann, dadurch gekennzeichnet, dass - ausgehend von Bauxit - eine alkalische Aluminiumlösung hergestellt, das Bauxit bei Atmosphärendruck in einem Reaktor mit einer Lösung mit mindestens 11 Gew.-% NaOH angegriffen, die erhaltene Lösung mit Harzen gereinigt und das gereinigte Produkt zusammen mit einer alkalischen SiO2-Lösung mit einem Molverhältnis SiO2/Na₂0 zwischen 2,0 und 2,5 einer Etappe zur Herstellung des Gels zugeführt wird.

2. Verfahren nach Anspruch 1, dadurch gekennzeichnet, dass die Lösung des Bauxits in einem Rotationsreaktor erfolgt.

3. Verfahren nach Anspruch 1, dadurch gekennzeichnet, dass die Bauxitreste (Schlämme) mit kochender Schwefelsäure behandelt und die Sulfate als Unterprodukte abgetrennt werden, während das infolge des Säureangriffs entstandene SiO2 als Rohstoff dem SiO2-Reaktor zugeführt wird.

4. Verfahren nach Anspruch 1, gekennzeichnet durch die Reinigung der alkalischen Aluminiumlösung, welche auf Grund der Digerierung des Bauxits mit NaOH entsteht, mit hydrophob interaktiven Harzen.

5. Verfahren nach Anspruch 1, dadurch gekennzeichnet, dass die NaOH-Lösung eine Konzentration von 11 bis 15 Gew.-% aufweist.

## Revendications

1. Procédé pour préparer un gel qui puisse être utilisé afin d'obtenir des zéolithes, qui est caractérisé par le fait que l'on prépare une solution alcaline d'aluminium à partir de bauxite, celle-ci est attaquée dans un réacteur se trouvant à la pression atmosphérique avec une solution dont 11% du poids pour le moins soit composée de NaOH, la solution qui en résulte est purifiée avec des résines et le produit une fois purifié passe à une étape de préparation du gel, en même temps qu'une solution alcaline de SiO2, qui a un rapport molaire SiO2/Na2O situé entre 2,0 et 2,5.

2. Procédé, conforme à la revendication 1, qui est caractérisé par le fait que la solution de bauxite est effectuée dans un réacteur rotatoire.

3. Procédé conforme à la revendication 1, qui est caractérisé par le fait que les résidus (boues) de bauxite sont traités avec de l'acide sulfurique en ébullition, qu'on en sépare les sulfates en tant que sous-produits et que le SiO2, qui résulte de l'attaque par l'acide, est renvoyé comme matière première au réacteur de SiO2.

4. Procédé conforme à la revendication 1, qui est caractérisé par la purification de la solution alcaline d'aluminium, qui résulte de la digestion de la bauxite par NaOH, au moyen de résines à interaction hydrophobique.

5. Procédé conforme à la revendication 1, qui est caractérisé par le fait que la solution de NaOH a une concentration de poids oscillant entre 11 à 15%.
